# EUROPÄISCHE PATENTSCHRIFT

(11) **EP 3 738 942 B1**
(45) Veröffentlichungstag und Bekanntmachung des Hinweises auf die Patenterteilung: **25.12.2024**
(21) Anmeldenummer: 20174321.8
(22) Anmeldetag: 13.05.2020
(51) Int. Cl.: C04B 41/00, C04B 41/52, C04B 41/89

(54) **KERAMIK MIT KORROSIONSSCHUTZSCHICHT, VERFAHREN ZU DEREN HERSTELLUNG UND DEREN VERWENDUNG**
CERAMIC WITH ANTI-CORROSION COATING AND METHOD FOR ITS PREPARATION AND ITS USE
CÉRAMIQUE POURVUE D'UNEE COUCHE DE PROTECTION CONTRE LA CORROSION, SON PROCÉDÉ DE FABRICATION ET SON UTILISATION

(30) Priorität: 14.05.2019 DE 102019206940
(43) Veröffentlichungstag der Anmeldung: 18.11.2020
(73) Patentinhaber: Fraunhofer-Gesellschaft zur Förderung der angewandten Forschung e.V., 80686 München (DE)
(72) Erfinder: Nöth, Andreas, 95448 Bayreuth (DE); Vogt, Joachim, 95448 Bayreuth (DE)
(74) Vertreter: Pfenning, Meinig & Partner mbB

(56) Entgegenhaltungen:
- EP-B1- 2 344 590

## Beschreibung

Die Erfindung betrifft eine Keramik, insbesondere eine Silizium-haltige Nichtoxidkeramik (SiNOK) mit einer zumindest bereichsweise auf der Oberfläche der Keramik aufgebrachten Korrosionsschutzschicht aus einem Mehrschichtsystem, enthaltend eine korrosionsstabile Deckschicht, welche eine Diffusionsbarriere gegenüber Heißgas, Sauerstoff oder anderen auf die Keramik korrosiv wirkenden Stoffen, wie korrosiv wirkenden Schmelzen und Schlacken etc., darstellt, und mindestens eine zwischen Keramik und Deckschicht angeordnete haftvermittelnde Grundschicht, wobei die Grundschicht aus einem Gemisch enthaltend ZrOz und ZrTiO₄ und/oder Al₂TiO₅, jeweils stabilisiert oder unstabilisiert, besteht. Ebenso betrifft die Erfindung die Herstellung dieser korrosionsgeschützten Keramik und deren Verwendung.

Keramische Werkstoffe, insbesondere nichtoxidische keramische Werkstoffe, wie insbesondere SiC und Si₃N₄ sind tribologisch, mechanisch und thermisch hoch beanspruchbare Werkstoffe. Sie weisen vergleichsweise geringe Dichten bei zugleich hohen Festigkeiten und hoher Härte auf. Es sind auch Faserverbundwerkstoffe im Einsatz, bei denen in die bezeichneten nichtoxidischen keramischen Werkstoffe Verstärkungsfasern eingebettet sind. Letztere können ebenfalls aus dem entsprechenden z.B. nichtoxidischen, Silizium-haltigen keramischen Werkstoff wie etwa Siliziumcarbid bestehen. Faserverstärkte keramische Werkstoffe besitzen zusätzlich zu den o.g. Eigenschaften ein schadenstoleranteres, quasiduktiles Bruchverhalten, was das Einsatzspektrum für keramische Werkstoffe als Ingenieurswerkstoff erweitert.

Insbesondere faserverstärkte Nichtoxidkeramiken sind aufgrund ihrer hohen thermischen Beständigkeit, Schadenstoleranz und ihrer Kriechbeständigkeit für die Substitution hochwarmfester Superlegierungen, wie sie bisher üblicherweise beispielsweise in Gasturbinen eingesetzt werden, geeignet. Sie ermöglichen perspektivisch eine Erhöhung der Innenraumtemperaturen im Heißgasbereich von Gasturbinen um mehrere 100 K, was wiederum zu einer entsprechenden Erhöhung des Wirkungsgrades führt. Dies resultiert in einer Reduzierung des Kraftstoffverbrauchs und entsprechend des CO₂-Ausstoßes.

Bei der Verbrennung von Kohlenwasserstoffverbindungen in Brennkammern von Gasturbinen bildet sich korrosiv wirkender heißer Wasserdampf. Dieser führt zu einer beschleunigten Oxidation der Oberfläche von Silizium enthaltenden Oxid- und Nichtoxidkeramiken, wodurch im Kontakt mit dem heißen Wasserdampf wiederum leichtflüchtige Si-Oₓ-H_{y}-Verbindungen entstehen. Durch deren Verflüchtigung und die voranschreitende Oxidation dieser keramischen Werkstoffe kann ein Materialabtrag mit Raten im Bereich von 0,2 µm/h bis 0,5 µm/h entstehen.

Der Einsatz Silizium-haltiger Oxid- und Nichtoxidkeramiken für diese Anwendungen setzt daher einen effektiven Schutz durch Korrosionsschutzschichten voraus, welche auch als Environmental Barrier Coatings (EBCs) bezeichnet werden. In der Regel werden dazu Schichtsysteme mit mehreren übereinander liegenden Schichten eingesetzt. Diese beinhalten eine grundlegende Haftvermittlerschicht auf dem Substrat, das sog. Bondcoat, Zwischenschichten zur Reduzierung thermischer Spannungen, die infolge unterschiedlicher thermischer Ausdehnungskoeffizienten auftreten, sowie Deckschichten. Zwischenschichten können auch als Haftvermittler zwischen Deckschichten und einer anderen Haftschicht dienen.

Mindestens eine Deckschicht dient als eigentliche Korrosionsschutzschicht. Sie sollte daher dicht sein, eine Diffusionsbarriere zumindest gegenüber Heißgas und Sauerstoff darstellen und hydrothermalbeständig sein. Sie sollte ferner auch beständig gegen andere korrosive Medien sein. Beispielhaft betrifft dies alkalihaltige mineralische Partikel (z.B. Calcium-Magnesium-Alumosilikate - CMAS), welche z.B. im Fall von Fluggasturbinen mit der Umgebungsluft angesaugt werden, und dann im Heißgaspfad einer Gasturbine korrosiv wirkende Schmelzen und Schlacken bilden können.

In dem Patent EP 2 344 590 B1 ist ein Schichtsystem beschrieben, in welchem auf der Oberfläche eines Superlegierungssubstrates oder eines keramischen Substrates eine Haftschicht aufgetragen wird, welche überwiegend aus einem Seltenerdsilikat besteht, und in welcher weitere Oxide bzw. Titanate oder Silikate mit einem Anteil von 0,1 - 30 Gew.-% enthalten sein können.

Bei diesem Schichtsystem können auch weitere übergelagerte Schichten vorhanden sein, die zwischen der Substratoberfläche und einer geeigneten Deckschicht implementiert werden können, um thermische Spannungen zu reduzieren und die Barrierewirkung zu erhöhen. Mehrere Schichten erhöhen aber den Herstellungsaufwand und die Kosten.

Nachteilig für die darin beschriebene Haftschicht sind die erhöhten Kosten durch den überwiegend hohen Anteil von Seltenerdverbindungen im direkten Kontakt mit der Substratoberfläche, obwohl diese Verbindungen hauptsächlich als Diffusionsbarriere in den korrosionsstabilen Deckschichten benötigt werden. Ferner ist die direkte chemische Anbindung von Seltenerdsilikaten an die Oberfläche von siliziumhaltigen Nichtoxidkeramiken unzureichend, wodurch die Funktion als Haftschicht beeinträchtigt wird.

Es ist daher Aufgabe der Erfindung, eine Keramik mit einem Schichtsystem zum Korrosionsschutz zu versehen, wobei das Schichtsystem möglichst einfach aufgebaut sein soll, eine gute Anhaftung aufweisen soll und unter hohen Temperaturen und korrosiv wirkenden Bedingungen über eine hohe Lebensdauer verfügen soll.

Erfindungsgemäß wird diese Aufgabe mit der Keramik, insbesondere mit einer Silizium-haltigen Nichtoxidkeramik, die die Merkmale des Anspruchs 1 aufweist, gelöst. Diese kann z.B. mit einem nasschemischen Auftragsverfahren gemäß Anspruch 8 beschichtet werden, wobei auch andere gängige Beschichtungsverfahren wie z.B. Plasmaspritzen, chemische oder physikalische Gasphasenabscheidung, Sputtern, Pulverauftrag durch Auftragsschweißen, Pulverbeschichtung, o.ä. möglich sind. Vorteilhafte Ausgestaltungen der Erfindung können mit in untergeordneten Ansprüchen bezeichneten Merkmalen realisiert werden.

Erfindungsgemäß wird eine Keramik, insbesondere eine Silizium-haltige Nichtoxidkeramik bereitgestellt, bei der zumindest bereichsweise auf der Oberfläche der Keramik eine Korrosionsschutzschicht aus einem Mehrschichtsystem enthaltend eine hydrothermal stabile Deckschicht, enthaltend ein Seltenerdsilikat, ein Seltenerdtitanat, ein Seltenerdoxid oder Mischungen hiervon, die eine Diffusionsbarriere oder Sperrschicht gegenüber Heißgas, Sauerstoff oder anderen auf die Keramik korrosiv wirkenden Stoffen, wie korrosiv wirkenden Schmelzen und Schlacken etc., darstellt, und mindestens eine zwischen Nichtoxidkeramik mit einem Wärmeausdehnungskoeffizienten (WAK) α_{NOK} und Deckschicht angeordnete haftvermittelnde Grundschicht mit einem Wärmeausdehnungskoeffizienten α_{ZS}, aufgebracht ist. Die Grundschicht ist erfindungsgemäß aus einem Gemisch enthaltend ZrO₂ und Al₂TiO₅ und ggf. ZrTiO4 gebildet, wobei die Mengenanteile von diesen Komponenten so gewählt sind, dass das Verhältnis der Wärmeausdehnungskoeffizienten α_{ZS} /α_{NOK} im Bereich von 0,75 bis 1,25 liegt.

Das Gemisch enthält vorzugsweise ZrOz und Al₂TiO₅ mit einem Molmengenverhältnis von 1 : 10 bis 10 : 1 oder ZrOz und ZrTiO₄ und Al₂TiO₅ mit einem Molmengenverhältnis von 1 : 0,05 : 0,05 bis 1 : 5 : 5. Dabei ist es bevorzugt, dass ein Molmengenverhältnis von ZrTiO₄ und Al₂TiO₅ zwischen 1 : 1 eingehalten ist.

Die Nichtoxidkeramik ist vorzugsweise ausgewählt aus der Gruppe bestehend aus oder enthaltend Siliziumnitrid (Si₃N₄), Siliziumcarbid (SiC), Siliziumcarbidfaser-verstärktes Siliziumcarbid (SiC/SiC) und Kombinationen oder Verbunden hiervon.

Die Haftvermittlung zwischen Oberfläche der Keramik und der Grundschicht wird vorzugsweise durch aus SiOz und ZrOz reaktiv gebildetem Zirkoniumsilikat realisiert. Dieses durch Sinterung gebildete ZrSiO₄ ermöglicht die Haftung zwischen Keramikoberfläche und Grundschicht, wobei hier auch weitere Phasen gebildet werden, z.B. Zr₅Ti₇O₂₄, Mischphasen aus ZrTiO₄ und ZrSiO₄ sowie Yttrium-Titanat.

Stabilisiertes Zirkoniumoxid weist einen WAK im Bereich von ca. 10 · 10⁶ K⁻¹ auf. Der WAK für gängige SiNOK liegt dagegen im Bereich 2 · 10⁻⁶ K⁻¹ bis 5,5 · 10⁻⁶ K⁻¹. Der WAK der Korrosionsschutz-Schichtsysteme muss jedoch auf den WAK der jeweiligen SiNOK angepasst werden, um thermische Spannungen vor allem bei Thermozyklierung und Thermoschock zu vermeiden. Letztere können zu Rissen oder gar einem Abplatzen des Schichtsystems führen, was zum Verlust der Korrosionsschutzwirkung führt.

Durch die Beimengung der jeweiligen Anteile des oder der Titanate (ZrTiO₄ und/oder Al₂TiO₅) zu dem eingesetztenZrOz in stabilisierter oder unstabilisierter Form kann der WAK an das Substratmaterial angepasst werden. Wird hierbei Al₂TiO₅ verwendet, kann dieses vorzugsweise mit MgO stabilisiert werden. Dabei wird vorzugsweise ein Anteil an MgO bezogen auf das Al₂TiO₅ im Bereich von 0,1 mol.% bis 5 mol.% verwendet. Das verwendete ZrOz kann auch in teil- oder vollstabilisierter Form vorliegen, z.B. durch Yttrium-, Calcium-, Magnesium-, Cer-, Scandium- oder Ytterbium-Dotierung. In diesem Fall besitzt das ZrOz eine zusätzlich erhöhte Risszähigkeit.

Al₂TiO₅weist eine hohe Thermoschock- bzw. Temperaturwechselbeständigkeit auf, welche u.a. auf den niedrigen WAK von < 1,6 * 10⁻⁶ K⁻¹ zurückgeht. Dieser ist durch die anisotrope thermische Ausdehnung der Al₂TiO₅-Kristallite bedingt. Letztere bilden bei der thermischen Ausdehnung bzw. -kontraktion ein Netzwerk aus Mikrorissen, dessen frei stehendes Volumen für die thermische Expansion benachbarter Kristallite zur Verfügung steht. Die geringere Anhaftung von Al₂TiO₅ an die Substratoberfläche von SiNOK kann durch den ZrO₂₋Anteil im Grundschichtwerkstoff kompensiert werden.

ZrTiO₄ bildet bei der thermischen Ausdehnung und -kontraktion ebenfalls ein Mikrorissnetzwerk. Der WAK von ZrTiO₄ allein liegt jedoch im Bereich zwischen 8 * 10⁻⁶ K⁻¹ bis 8,5 * 10⁻⁶ K⁻¹. In Kombination mit andersartigen Phasen wie z.B. ZrOz können jedoch niedrigere WAK im Bereich der SiNOK erreicht werden. ZrTiO₄ bindet ebenfalls unzureichend an der Oberfläche einer SiNOK an, was analog zu Al₂TiO₅ mit einem entsprechenden Anteil an ZrOzkompensiert werden kann.

Der erfindungsgemäß für die Grundschicht eingesetzte Werkstoff ist durch die Kombination thermoschockbeständiger und risszäher Werkstoffe mit einer guten chemischen Anbindung an die Substratoberfläche resistent gegen die Bildung von Rissen und Abplatzungen Er weist daher ein für EBC geeignetes Eigenschaftsprofil insbesondere bei einer Verwendung der erfindungsgemäßen Nichtoxidkeramik in Turbinen, insbesondere Gasturbinen bzw. deren Bauteilen, auf.

Auf die Oberfläche der erfindungsgemäßen Grundschicht kann eine hydrothermalstabile Deckschicht aufgebracht werden. Dies ist beispielsweise eine Schicht aus mit 0,1 - 5 Mol.-% Al₂O₃ dotiertem Diyttrium-Monosilikat, Diyttriumdisilikat oder Mischungen hiervon. Anstelle von Yttriumsilikaten können jedoch auch andere Seltenerdsilikate, wie z.B. Ytterbiumsilikat aufgebracht werden. Ferner können auch Seltenerdtitanate wie z.B. Diyttriummono- und - dititanat sowie analoge aufgebracht werden. Auch Seltenerdoxide wie z.B. Yttriumoxid oder Ytterbiumoxid können aufgebracht werden, wobei zu hohe Diskrepanzen der WAK vermieden werden müssen. Auch eine Mischung der o.g. Komponenten ist als Deckschicht möglich.

Erfindungsgemäß wird auch ein Verfahren zur Herstellung einer Keramik, insbesondere eine Silizium-haltige Nichtoxidkeramik, mit einer zumindest bereichsweise auf der Oberfläche der Nichtoxidkeramik aufgebrachten Korrosionsschutzschicht aus einem Mehrschichtsystem enthaltend eine korrosionsstabile Deckschicht, die eine Diffusionsbarriere oder Sperrschicht gegenüber Heißgas, Sauerstoff oder anderen auf die Keramik korrosiv wirkenden Stoffen darstellt, bereitgestellt, bei dem
a) ein Gemisch, enthaltend Partikel von ZiOz und ZrTiO₄ und/oder Al₂TiO₅ sowie mindestens ein organischer Binder als wässrige Suspension bereitgestellt wird,
b) das Gemisch auf die zu beschichtende Oberfläche des Substrats aufgetragen wird,
c) im Anschluss daran eine thermische Behandlung bis zu einer maximalen Temperatur von 1500 °C durchgeführt wird, wobei die organischen Komponenten ausgetrieben und die Grundschicht durch Sintern verdichtet wird,
d) anschließend eine korrosionsstabile Deckschicht auf der Grundschicht aufgebracht wird, durch ein Gemisch, enthaltend Partikel eines Seltenerdsilikates und/oder eines Seltenerdtitanats und/oder eines Seltenerdoxides oder Mischungen hiervon sowie ein organischer Binder, welches im Anschluss daran einer thermischen Behandlung bis zu einer maximalen Temperatur von 1600 °C unterzogen wird, wobei die organischen Komponenten ausgetrieben und die Deckschicht durch Sintern verdichtet wird.

In der Suspension kann/können vorzugsweise Dispergieradditive und/oder Rheologieadditive und/oder Entschäumungsmittel enthalten sein. Diese können vor oder während der thermischen Behandlung ebenfalls entfernt werden.

Die thermische Behandlung, mit der die Grundschicht ausgebildet wird, kann in mehreren Temperaturstufen mit vorgebbaren Heizraten und Haltezeiten durchgeführt werden. Dabei kann die Heizrate von einer Stufe zu einer nachfolgenden Stufe zuerst erhöht und am Ende in der letzten Stufe eine kontinuierliche Abkühlung mit konstanter Rate bis zum Erreichen der normalen Umgebungstemperatur von ca. 25 °C durchgeführt werden.

Durch Einhaltung eines bestimmten Anteils an ZrO₂, stabilisiert oder unstabilisiert, mit einem oder den beiden Titanaten kann der thermische Ausdehnungskoeffizient des Zwischenschichtwerkstoffs sehr gut an den thermischen Ausdehnungskoeffizienten des Substratwerkstoffs sowie auch des Deckschichtwerkstoffs angepasst werden, so dass thermische Spannungen während des Betriebes zumindest weitestgehend vermieden werden können. Außerdem kann durch die verwendeten Werkstoffe eine hohe Risszähigkeit und Thermoschockstabilität erreicht werden. Insbesondere bei einem Einsatz in Gasturbinen können diese den häufigen Temperaturwechseln und den mechanischen Beanspruchungen daher gut standhalten.

Die Grundschicht kann problemlos unter oxidierenden Bedingungen auf Substratoberflächen eingebrannt werden. Dies trifft insbesondere auf faserverstärkte SiNOK und insbesondere auf SiC-basierte Werkstoffe zu.

Das durch chemische Reaktion von SiO₂ und ZrO₂ gebildete ZrSiO₄, verhindert bzw. behindert eine weitere Oxidation des Substratwerkstoffs bei der thermischen Behandlung. Dies bietet Vorteile hinsichtlich Kosten, Zeit und der Prozessführung, da auf eine inerte Umgebung, Spülzyklen und eine exakte Überwachung der Prozessatmosphäre verzichtet werden kann. Die chemische Anbindung der Grundschicht auf die Substratoberfläche ist sehr gut. Das Aufbringen einer Deckschicht sowie deren Einbrennen sind problemlos möglich und ermöglichen eine gute Anhaftung zur Grundschicht.

Der thermische Ausdehnungskoeffizient des Grundschichtwerkstoffs kann auch gut an denjenigen des Seltenerd-basierten Deckschichtwerkstoffs angepasst sein. Bei Verwendung geeigneter korrosionsstabiler Deckmaterialien treten keine nachteiligen chemischen Reaktionen zwischen Grund- und Deckschicht auf, sodass die Korrosionsschutzwirkung der Deckschicht nicht beeinträchtigt wird. Ferner weisen die verwendeten Titanate sowie das ZrOz eine sehr niedrige Wärmeleitfähigkeit von < 2 W/mK auf, sodass die aufgetragene Korrosionsschutzschicht zusätzlich als Wärmedämmschicht (Thermal Barrier Coating, kurz TBC) zum Schutz des Substratmaterials vor hohen Temperaturen fungiert.

Ein wichtiger Vorteil ist auch der mögliche Verzicht auf zusätzliche Zwischenschichten, die u.U. für eine Anpassung der WAK oder eine verbesserte Barrierewirkung erforderlich wären. Kostenintensive Seltenerdverbindungen werden nur in der Deckschicht verwendet, was den Einsatz seltener Ressourcen schont, und das beschriebene Schichtsystem wirtschaftlich attraktiv macht.

Die mit dem beschriebenen Korrosionsschutzschichtsystem beschichteten Keramiken, insbesondere die SiNOK, eignen sich für eine Verwendung in Turbinen, insbesondere in Gasturbinen, sowie für weitere Anwendungen mit Heißgasbelastung oder korrosiven Belastungen in der Wärmeprozesstechnik, der Energietechnik, sowie in der Verfahrenstechnik.

Das erfindungsgemäß vorgesehene Schichtsystem ermöglicht einen einfachen und kostengünstig herstellbaren Aufbau einer erfindungsgemäßen Keramik. Diese ist sowohl mechanisch wie thermisch und insbesondere auch chemisch stabil. Mehrere zusätzliche Schichten, die bestimmte Aufgaben erfüllen und Wirkungen hervorrufen können, sind nicht erforderlich.

Nachfolgend soll die Erfindung anhand eines nasschemischen Auftragsverfahrens beispielhaft näher erläutert werden.

### Beispiel

Zunächst wird eine wässrige Suspension aus ZrTiO₄-Partikeln (selbst synthetisiert, Kalzinierungstemperatur 1600 °C 2 h, Partikelgröße bimodal 0,5 µm und 2 µm) und ZrO₂-Partikeln (CS10, Saint Gobain, d₅₀-Wert 1,3 µm) in einem Molmengenverhältnis von 1:2 hergestellt. Hierfür werden in einem 25 mL-Kunststoffbecher 0,6 g VE-Wasser und 0,24 g BYK Anti-Terra 250 (Netz- und Dispergierhilfsmittel) vorgelegt und vermischt. Hiernach werden 2,4 g der Pulvermischung aus ZrTiO₄ und ZrOz in einem Molmengenverhältnis von 1:2, sowie 1,16 g ZrO₂-Mahlperlen (Durchmesser 3 mm) hinzugefügt. Des Weiteren wird ein Tropfen des Entschäumers BYK LP-C 22787 hinzugegeben, der Becher mit Deckel verschlossen und versiegelt, und 1,5 min. bei 1000 rpm in einem Speedmixer VLC 150.1 (Fa. Hauschild) behandelt.

Hiernach wird nochmals ein Tropfen (ca. 0,03 mL) des Binders BYK LP-C 22346 hinzugegeben, und der verschlossene und versiegelte Becher erneut 1,5 min. bei 1000 rpm behandelt.

Vor dem Beschichtungsvorgang wird die zu beschichtende Substratoberfläche (in diesem Falle SSiC, Hexoloy SA, Fa. Saint Gobain Industriekeramik GmbH) mit Ethanol gründlich gereinigt und bei 60 °C über 15 min. in einem Umlufttrockenschrank getrocknet.

Die wässrige Suspension wird über Streichen, Sprühen oder Tauchen auf das Substrat aufgebracht, und an Luft ca. 30 min. bei Raumtemperatur und anschließend bei 60 °C in einem Umlufttrockenschrank getrocknet (mind. 1,5 h).

Bei Bedarf kann die Oberfläche der getrockneten Suspension mechanisch durch Schleifen geglättet werden. Dafür kann Schleifpapier mit einer Körnung von z.B. 400 eingesetzt werden.

Im Anschluss an die Trocknung wird eine thermische Behandlung zur Entbinderung und Sinterung in einem Ofen durchgeführt, in der eine Luft- oder auch eine nichtoxidierende Atmosphäre (z.B. Argon, Stickstoff) verwendet werden kann.

In der ersten Stufe der thermischen Behandlung erfolgt ein Aufheizen von 25 °C auf 1200 °C mit einer Heizrate von 2,5 K/min zur Entbinderung. In der zweiten Stufe wird mit 1 K/min. auf 1300 °C weiter aufgeheizt und diese Temperatur über 1 h gehalten. In der dritten Stufe erfolgt ein Aufheizen von 1300 °C auf 1400 °C mit 1 K/min. Die 1400 °C werden über eine Zeit von 1 h gehalten. Im Anschluss daran wird die Temperatur in einer fünften Stufe von 1400 °C auf 1475 °C bei Einhaltung einer Heizrate von 1 K/min erhöht und diese Temperatur über 2 h gehalten.

Nach dieser Haltezeit erfolgt eine Abkühlung auf 25°C mit einer Rate von 2,5 K/min.

Die so erhaltene Zwischenschicht hat einen thermischen Ausdehnungskoeffizienten von ca. 5,0 ·10⁻⁶ K⁻¹.

Im Anschluss daran wird auf der nach außen weisenden Oberfläche der Zwischenschicht eine Deckschicht, bestehend aus Yttriumsilikat, aufgetragen. Hierzu wird die oben genannte Schichtherstellung analog durchgeführt, jedoch dem VE-Wasser anstelle der ZrTiO₄ - ZrOz-Mischung eine Pulvermischung aus 2/3 Diyttriumdisilikat und 1/3 Diyttriummonosilikat (selbst synthetisiert, bei 1600 °C über 2 h kalziniert, mittlere Partikelgröße 850 nm) zugegeben, welcher 1 Mol.-% Aluminiumoxid (TM-DAR, Taimei Chemicals Co. Ltd.) zugesetzt ist.

Der Auftrag der Suspension für die Deckschicht erfolgt analog zur Grundschicht mittels Streichen, Sprühen oder Tauchen. Im Anschluss erfolgt die Trocknung der Deckschicht analog.

Zur Fertigstellung des Schichtsystems wird eine weitere thermische Behandlung zur Entbinderung und Sinterung der Deckschicht durchgeführt. Hierzu wird die Probe erneut in einem Ofen mit Luft- oder Inertgasatmosphäre positioniert. Hierzu wird mit einer Heizrate von 2,5 K/min. auf eine Temperatur von 1450 °C geheizt, diese Temperatur 5 h gehalten, und mit einer Heizrate von 2,5 K/min. auf Raumtemperatur abgekühlt.

## Patentansprüche

1. Keramik mit einer zumindest bereichsweise auf der Oberfläche der Keramik aufgebrachten Korrosionsschutzschicht aus einem Mehrschichtsystem, enthaltend eine korrosionsstabile Deckschicht enthaltend ein Seltenerdsilikat, ein Seltenerdtitanat, ein Seltenerdoxid oder Mischungen hiervon, die eine Diffusionsbarriere oder Sperrschicht gegenüber Heißgas, Sauerstoff oder anderen auf die Keramik korrosiv wirkenden Stoffen darstellt, und mindestens eine zwischen Keramik mit einem Wärmeausdehnungskoeffizienten α_{NOK} und Deckschicht angeordnete haftvermittelnde Grundschicht mit einem Wärmeausdehnungskoeffizienten α_{ZS},
wobei die Grundschicht aus einem Gemisch enthaltend ZrOz und Al₂TiO₅ und gegebenenfalls ZrTiO₄, jeweils stabilisiert
oder unstabilisiert, besteht und die Mengenanteile dieser Komponenten so gewählt sind, dass das Verhältnis der Wärmeausdehnungskoeffizienten α_{ZS} /α_{NOK} im Bereich von 0,75 bis 1,25 liegt.

2. Keramik nach Anspruch 1,
**dadurch gekennzeichnet, dass** das Gemisch ZrO₂ und Al₂TiO₅ mit einem Molmengenverhältnis von 1 : 10 bis 10 : 1 oder ZrOz und ZrTiO₄ und Al₂TiO₅ mit einem Molmengenverhältnis von 1 : 0,05 : 0,05 bis 1 : 5 : 5 enthält, wobei bevorzugt ein Molmengenverhältnis von ZrTiO₄ und (stabilisiertem) Al₂TiO₅ zwischen 1 : 1 eingehalten ist.

3. Keramik nach einem der vorhergehenden Ansprüche,
**dadurch gekennzeichnet, dass** das Gemisch frei von Seltenerdsilikat ist.

4. Keramik nach einem der vorhergehenden Ansprüche,
**dadurch gekennzeichnet, dass** die Keramik eine Nichtoxidkeramik ist,
wobei die Nichtoxidkeramik aus Siliziumnitrid (Si₃N₄), Siliziumcarbid (SiC), Siliziumcarbidfaser-verstärktem Siliziumcarbid (SiC/SiC), Kombinationen oder Verbunden hiervon besteht oder diese enthält.

5. Keramik nach einem der vorhergehenden Ansprüche,
**dadurch gekennzeichnet, dass** die Haftvermittlung zwischen Oberfläche der Keramik und der Grundschicht durch aus SiO₂ und ZrO₂ reaktiv gebildetem ZrSiO₄ realisiert ist.

6. Keramik nach einem der vorhergehenden Ansprüche,
**dadurch gekennzeichnet, dass** das in der Grundschicht enthaltene Al₂TiO₅ mit MgO stabilisiert ist.

7. Keramik nach einem der vorhergehenden Ansprüche,
**dadurch gekennzeichnet, dass** die Keramik eine Silizium-haltige Nichtoxidkeramik ist.

8. Verfahren zur Herstellung einer Keramik mit einer zumindest bereichsweise auf der Oberfläche der Keramik aufgebrachten Korrosionsschutzschicht aus einem Mehrschichtsystem enthaltend eine hydrothermal stabile Deckschicht, die eine Diffusionsbarriere gegenüber Heißgas und Sauerstoff darstellt, bei dem
a) ein Gemisch enthaltend Partikel von ZrOz und Al₂TiO₅ und gegebenenfalls ZrTiO₄, jeweils stabilisiert oder unstabilisiert, sowie mindestens ein organischer Binder als wässrige Suspension bereitgestellt wird,
b) das Gemisch auf die zu beschichtende Oberfläche des Substrats aufgetragen wird,
c) im Anschluss daran eine thermische Behandlung bis zu einer maximalen Temperatur von 1500 °C durchgeführt wird, wobei die organischen Komponenten ausgetrieben und die Grundschicht durch Sintern verdichtet wird,
d) anschließend eine Deckschicht auf der Grundschicht dadurch aufgebracht wird, dass ein Gemisch enthaltend Partikel eines Seltenerdsilikates und/oder eines Seltenerdtitanates und/oder eines Seltenerdoxides oder Mischungen hiervon sowie einen organischer Binder einer thermischen Behandlung bis zu einer maximalen Temperatur von 1600 °C unterzogen wird, wobei die organischen Komponenten ausgetrieben und die Deckschicht durch Sintern verdichtet wird.

9. Verfahren nach dem vorhergehenden Anspruch,
**dadurch gekennzeichnet, dass** auf der mit der Grundschicht zu beschichtenden Oberfläche der Keramik eine Passivierungsschicht oder ein Gefügebestandteil enthaltend SiOz vorliegt, auf die die Suspension aufgetragen wird, und welche bei der thermischen Behandlung bei einer Temperatur > 1000 °C durch chemische Reaktion des SiOz mit dem ZrOz zu Zirkoniumsilikat eine Anhaftung der Grundschicht an die Oberfläche der Nichtoxidkeramik ermöglicht wird.

10. Verfahren nach einem der zwei vorhergehenden Ansprüche,
**dadurch gekennzeichnet, dass** die thermische Behandlung in mehreren Temperaturstufen mit vorgebbaren Heizraten und Haltezeiten durchgeführt wird, wobei die Heizrate von einer Stufe zu einer nachfolgenden Stufe zuerst erhöht und am Ende in der letzten Stufe eine kontinuierliche Abkühlung mit konstanter Rate bis zum Erreichen der normalen Umgebungstemperatur durchgeführt wird.

11. Verfahren nach dem vorhergehenden Anspruch,
**dadurch gekennzeichnet, dass** der organische Binder ausgewählt ist aus der Gruppe bestehend aus Polyvinylalkohol bzw. -acetat (PVA), Polyethylenglykol (PEG), Polyvinylbutyral (PVB), Acrylate, Latexbinder, Zellulosederivaten, Polysacchariden, und Mischungen hiervon.

12. Verfahren nach einem der Ansprüche 8 bis 11,
**dadurch gekennzeichnet, dass** die Keramik eine Silizium-haltige Nichtoxidkeramik ist.

13. Verwendung der Keramik nach einem der Ansprüche 1 bis 7 in der Thermoprozesstechnik, Verfahrenstechnik, Energieerzeugung, und in Turbinen, insbesondere in Gasturbinen.

## Claims

1. Ceramic with a corrosion protection layer applied at least in certain areas to the surface of the ceramic and comprising a multilayer system, comprising a corrosion-resistant top layer comprising a rare earth silicate, a rare earth titanate, a rare earth oxide or mixtures thereof, which forms a diffusion barrier or barrier layer against hot gas, oxygen or other substances having a corrosive effect on the ceramic, and at least one adhesion-promoting base layer with a coefficient of thermal expansion α_{ZS} arranged between ceramic with a coefficient of thermal expansion α_{NOK} and top layer,
wherein the base layer consists of a mixture containing ZrO₂ and Al₂TiO₅ and optionally ZrTiO₄, each stabilized or unstabilized, and the proportions of these components are selected so that the ratio of the coefficients of thermal expansion α_{ZS}/α_{NOK} is in the range of 0.75 to 1.25.

2. Ceramic according to claim 1,
**characterized in that** the mixture comprises ZrO₂ and Al₂TiO₅ in a molar ratio of 1 : 10 to 10 : 1 or ZrO₂ and ZrTiO₄ and Al₂TiO₅ in a molar ratio of 1 : 0.05 : 0.05 to 1 : 5 : 5, preferably a molar ratio of ZrTiO₄ and (stabilized) Al₂TiO₅ of between 1:1 is maintained.

3. Ceramic according to any one of the preceding claims,
**characterized in that** the mixture is free of rare earth silicate.

4. Ceramic according to any one of the preceding claims,
**characterized in that** the ceramic is a non-oxide ceramic, wherein the non-oxide ceramic consists of or contains silicon nitride (Si₃N₄), silicon carbide (SiC), silicon carbide fiber reinforced silicon carbide (SiC/SiC), combinations or composites thereof.

5. Ceramic according to any one of the preceding claims,
**characterized in that** the adhesion promotion between the surface of the ceramic and the base layer is realized by ZrSiO₄ reactively formed from SiO₂ and ZrO₂.

6. Ceramic according to any one of the preceding claims,
**characterized in that** the Al₂TiO₅ contained in the base layer is stabilized with MgO.

7. Ceramic according to any one of the preceding claims,
**characterized in that** the ceramic is a silicon-containing non-oxide ceramic.

8. Process for the production of a ceramic with a corrosion protection layer applied at least in some areas to the surface of the ceramic and comprising a multilayer system containing a hydrothermally stable top layer which forms a diffusion barrier against hot gas and oxygen, in which
a) a mixture containing particles of ZrOz and Al₂TiO₅ and optionally ZrTiO₄, each stabilized or unstabilized, and at least one organic binder is provided as an aqueous suspension,
b) the mixture is applied to the surface of the substrate to be coated,
c) followed by thermal treatment up to a maximum temperature of 1500 °C, whereby the organic components are expelled and the base layer is compacted by sintering,
d) then a top layer is applied to the base layer by applying a mixture containing particles of a rare earth silicate and/or a rare earth titanate and/or a rare earth oxide or mixtures thereof
and an organic binder is subjected to a thermal treatment up to a maximum temperature of 1600 °C, whereby the organic components are expelled and the top layer is compacted by sintering.

9. Process according to the preceding claim,
**characterized in that** a passivation layer or a structural component containing SiO₂ is present on the surface of the ceramic to be coated with the base layer, to which the suspension is applied, and which, during the thermal treatment at a temperature > 1000 °C, enables adhesion of the base layer to the surface of the non-oxide ceramic by chemical reaction of the SiO₂ with the ZrOz to form zirconium silicate.

10. Process according to any one of the two preceding claims,
**characterized in that** the thermal treatment is carried out in several temperature stages with predeterminable heating rates and holding times, whereby the heating rate is first increased from one stage to a subsequent stage and at the end, in the last stage, continuous cooling is carried out at a constant rate until the normal ambient temperature is reached.

11. Process according to the preceding claim,
**characterized in that** the organic binder is selected from the group consisting of polyvinyl alcohol or acetate (PVA), polyethylene glycol (PEG), polyvinyl butyral (PVB), acrylates, latex binders, cellulose derivatives, polysaccharides, and mixtures thereof.

12. Process according to any one of claims 8 to 11,
**characterized in that** the ceramic is a silicon-containing non-oxide ceramic.

13. Use of the ceramic according to any one of claims 1 to 7 in thermal process engineering, process engineering, power generation, and in turbines, in particular in gas turbines.

## Revendications

1. Céramique avec une couche anticorrosion appliquée au moins par endroits sur la surface de la céramique et constituée d'un système multicouche, contenant une couche de finition résistante à la corrosion contenant un silicate de terre rare, un titanate de terre rare, un oxyde de terre rare ou leurs mélanges, qui constitue une barrière de diffusion ou une couche barrière contre les gaz chauds, l'oxygène ou d'autres substances agissant de manière corrosive sur la céramique, et au moins une couche de base adhésive présentant un coefficient de dilatation thermique α_{NOK} agencée entre la céramique présentant un coefficient de dilatation thermique α_{zs} et la couche de finition,
dans laquelle la couche de base est constituée d'un mélange contenant ZrO₂ et Al₂TiO₅ et éventuellement ZrTiO₄, respectivement stabilisé
ou non stabilisé, et les proportions desdits composants sont choisies de sorte que le rapport des coefficients de dilatation thermique α_{zs}/α_{NOK} se situe dans la plage comprise entre 0,75 et 1,25.

2. Céramique selon la revendication 1,
**caractérisée en ce que** le mélange contient ZrOz et Al₂TiO₅ avec un rapport molaire compris entre 1:10 et 10:1 ou ZrO₂ et ZrTiO₄ et Al₂TiO₅ avec un rapport molaire compris entre 1 :0,05:0,05 et 1:5:5, dans laquelle idéalement un rapport molaire de ZrTiO₄ et de Al₂TiO₅ (stabilisé) de 1:1 est respecté.

3. Céramique selon l'une quelconque des revendications précédentes,
**caractérisée en ce que** le mélange est exempt de silicate de terre rare.

4. Céramique selon l'une quelconque des revendications précédentes,
**caractérisée en ce que** la céramique est une céramique non oxyde, dans laquelle la céramique non oxyde est constituée ou contient du nitrure de silicium (Si₃N₄), du carbure de silicium (SiC), du carbure de silicium renforcé de fibres de carbure de silicium (SiC/SiC), des combinaisons ou composés de ceux-ci.

5. Céramique selon l'une quelconque des revendications précédentes,
**caractérisée en ce que** l'adhérence entre la surface de la céramique et la couche de base est réalisée grâce à du ZrSiO4 formé de manière réactive à partir de SiO₂ et de ZrO₂.

6. Céramique selon l'une quelconque des revendications précédentes,
**caractérisée en ce que** le Al₂TiO₅ contenu dans la couche de base est stabilisé avec du MgO.

7. Céramique selon l'une quelconque des revendications précédentes,
**caractérisée en ce que** la céramique est une céramique non oxyde contenant du silicium.

8. Procédé de fabrication d'une céramique avec une couche anticorrosion appliquée au moins par endroits sur la surface de la céramique et constituée d'un système multicouche contenant une couche de finition hydrothermiquement stable qui fournit une barrière de diffusion contre les gaz chauds et l'oxygène, dans lequel
a) un mélange contenant des particules de ZrOz et de Al₂TiO₅ et éventuellement de ZrTiO₄, respectivement stabilisé ou non stabilisé, et au moins un liant organique sous forme de suspension aqueuse, est fourni,
b) le mélange est appliqué sur la surface à revêtir du substrat,
c) un traitement thermique est ensuite mis en oeuvre jusqu'à une température maximale de 1 500°C, dans lequel les composants organiques sont expulsés et la couche de base est densifiée par frittage,
d) une couche de finition est ensuite appliquée sur la couche de base en soumettant un mélange, contenant des particules d'un silicate de terre rare et/ou d'un titanate de terre rare et/ou d'un oxyde de terre rare ou leurs mélanges,
et un liant organique, à un traitement thermique jusqu'à une température maximale de 1 600°C, dans lequel les composants organiques sont expulsés et la couche de finition est densifiée par frittage.

9. Procédé selon la revendication précédente,
**caractérisé en ce qu'**une couche de passivation, ou un composant structurel contenant du SiO₂, sur laquelle la suspension est appliquée et qui, lors du traitement thermique à une température > 1 000°C, permet une adhérence de la couche de base sur la surface de la céramique non oxyde par réaction chimique du SiO₂ avec le ZrO₂ donnant du silicate de zirconium, est présente sur la surface de la céramique à revêtir avec la couche de base.

10. Procédé selon l'une quelconque des revendications précédentes,
**caractérisée en ce que** le traitement thermique est effectué en plusieurs paliers de température avec des vitesses de chauffage prédé-finies et des temps de maintien prédéfinis, dans laquelle la vitesse de chauffage est d'abord augmentée entre un palier et un palier suivant, et à la fin dans le dernier palier, un refroidissement continu à une vitesse constante est mis en oeuvre jusqu'à ce que la température ambiante normale soit atteinte.

11. Procédé selon la revendication précédente,
**caractérisé en ce que** le liant organique est choisi dans le groupe constitué par l'alcool ou l'acétate de polyvinyle (PVA), le polyé-thylèneglycol (PEG), le polyvinylbutyral (PVB), les acrylates, les liants au latex, les dérivés de cellulose, les polysaccharides, et leurs mélanges.

12. Procédé selon l'une quelconque des revendications 8 à 11,
**caractérisée en ce que** la céramique est une céramique non oxyde contenant du silicium.

13. Utilisation de la céramique selon l'une quelconque des revendications 1 à 7 dans l'ingénierie des processus thermiques, l'ingénierie des procédés, la production d'énergie et dans les turbines, en particulier dans les turbines à gaz.
